# EUROPEAN PATENT SPECIFICATION

(11) **EP 1 325 860 B1**
(45) Date of publication and mention of the grant of the patent: **05.09.2007**
(21) Application number: 02029079.7
(22) Date of filing: 30.12.2002
(51) Int. Cl.: B62D 35/00

(54) **A commercial vehicle**
Nutzfahrzeug
Véhicule utilitaire

(30) Priority: 04.01.2002 IT TO20020007
(43) Date of publication of application: 09.07.2003
(73) Proprietor: IVECO S.p.A., 10156 Torino (IT)
(72) Inventor: Rolfo, Gian Piero, 10095 Grugliasco (IT); Morando, Carlo, 10123 Torino (IT)
(74) Representative: Gervasi, Gemma

(56) References cited:
- DE-A- 2 834 044
- DE-C- 4 014 577
- GB-A- 1 490 291
- GB-A- 1 524 470
- US-A- 3 836 191

## Description

The present invention relates to a commercial vehicle, in particular a lorry or a bus.

It is known that dirt of various types normally tends to be deposited on the external bodywork of said vehicles. For example, when travelling on wet and/or muddy roads, spray and mud are thrown up which, despite the shielding action performed by the mudguards upwardly surrounding the treads of the wheels, can reach the parts of the bodywork overhanging said wheels. In particular, above all as a result of bad weather, the doors and more generally the body sides of vehicles are often soiled with mud and dirt, the opening handles also being affected and, therefore, involving considerable inconvenience for the drivers and any passengers of said vehicles.

DE-A-2834044 and GB-A-1490291 disclose a commercial vehicle with a cabin provided with lateral doors, comprising deflector means arranged in alignment with the lateral edges of the cabin, and adapted to direct a flow of air along the lateral sides of the doors. These arrangements however do not ensure a complete cleaning of the lateral surface of the vehicle cabin.

Any of these documents can be taken as basis for the preamble features of claim 1.

It is the object of the present to devise a commercial vehicle which makes it possible to obviate the above-mentioned disadvantage and, therefore, in particular, makes it possible to reduce in a consistent manner the amount of dirt, mud and spray deposited on the body sides thereof.

This object is achieved by the commercial vehicle as described in claim 1.

With a view to a better understanding of the present invention a preferred embodiment thereof will be described non-restrictively by way of example below, with reference to the accompanying drawings, in which:
Figure 1 illustrates, in a perspective view, a driver's cab of a commercial vehicle designed in accordance with the present invention;
Figure 2 illustrates, in a perspective view and on an enlarged scale, a detail of the driver's cab in Figure 1, and
Figure 3 illustrates, in section and on an enlarged scale, a further detail of the driver's cab in Figure 1.

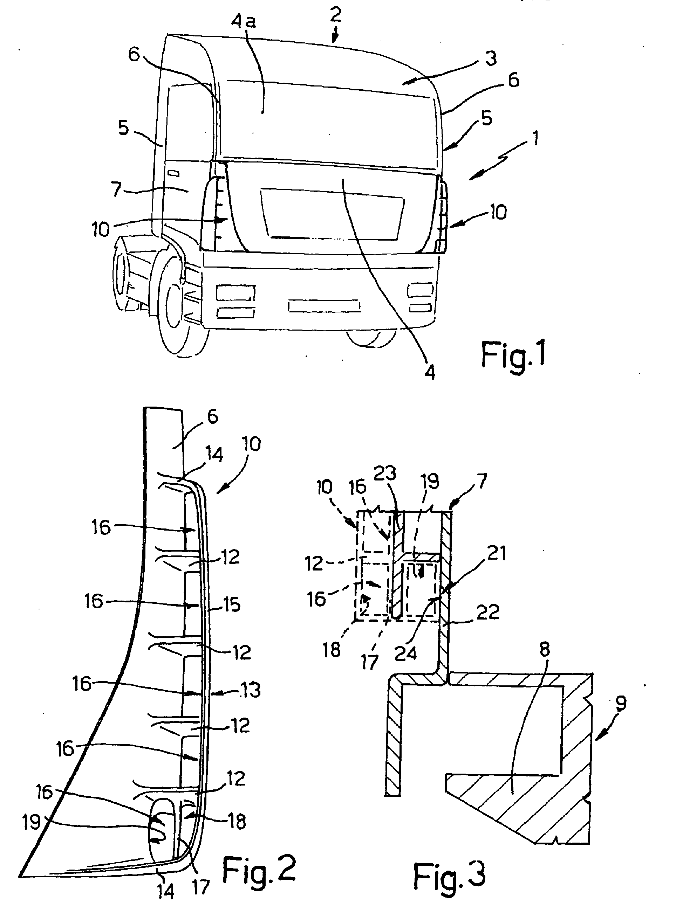

With reference to Figure 1, the reference numeral 1 generally denotes a commercial vehicle, in this case a lorry, of which solely a driver's cab 2 is visible.

It is pointed out that the concept forming the basis of the present invention could be applied to any type of commercial vehicle, including vehicles designed to convey passengers, for example buses.

The cab 2 comprises an outer body 3 delimited by a frontal surface 4 provided with a windscreen 4a, by a pair of body sides 5 extending from opposite vertical lateral edges 6 of the frontal surface 4 and provided with respective doors 7, and by a rear surface which is not visible in Figure 1.

In particular, as illustrated in Figure 3, each door 7 is provided with a lower extension strip 21 which, in turn, is formed by an inner panel 22 covering an upper step 8 of an access assembly 9 for the vehicle 1 and by an outer panel 23 facing and integral with said panel 22. In particular, the panel 23 partly covers the panel 22 and delimits therewith a downwardly open hollow space or channel 24.

The cab 2 is provided, in alignment with each lateral edge 6, with a deflector element 10 adapted to direct a flow of air along the respective body side 5 generated by the forward motion of the vehicle 1.

In particular, the deflector elements 10 are arranged at the height of a central horizontal strip of the frontal surface 4 below the windscreen 4a and they project outwards from the external profile of the body 3.

Each deflector element 10 comprises integrally a plurality of substantially horizontal ribs 12 protruding from the respective lateral edge 6 and arranged in succession along said lateral edge 6, and a C-shaped section 13 member having opposite end portions 14 projecting from said lateral edge 6 and a vertical substantially straight main portion 15, against which the free ends of the ribs 12 terminate. In practice, the ribs 12 are enclosed within the profile of the section member 13 and they delimit therewith and with the associated lateral edge 6 a plurality of passages 16 for conveying air towards the respective body side 5 when the vehicle 1 is moving.

As is evident in particular in Figure 2, the passages 14 have different sections from one another; more precisely, the ribs 12 are "closer together", i.e. are of smaller pitch, in alignment with the lower part of the lateral edges 6 so as to increase the air-conveying action in the zones of the panels 5 which are more likely to be touched by the driver and/or any passengers. Consequently, the passages 16 disposed at the bottom are of slightly reduced vertical dimensions in relation to the other passages 16.

The ribs 12 of each deflector element 10 are inclined so as to be mutually convergent towards a lower zone of the respective body side 5 and towards a rear part of the vehicle 1.

Advantageously (Figures 2 and 3), the lowest passage 16 of each deflector element 10 is divided by a vertical baffle 17 into two contiguous apertures 18,19 so as to convey air, when the vehicle 1 is moving, both along the outer surface of the panel 23 of the respective door 7 or into the hollow space 24 of the extension strip 21 of said door 7.

The advantages which can be achieved with the present invention are apparent from a study of the features of the vehicle 1 designed in accordance with therewith.

In particular, as a result of the movement of the vehicle 1, the deflector elements 10 convey jets of air along the body sides 5, thereby removing from the latter any dirt accumulated thereon.

Furthermore, because each of the passages 16 situated lower down is divided into two separate opening sections 18,19 it is also possible, by way of said jets of air, to effect the cleaning of the hollow space 24 situated between the panels 22 and 23 forming the lower extension strip 21 of the respective door 7.

Finally, it is evident that the vehicle 1 illustrated and described above can be subject to modifications and variations which do not depart from the scope of protection defined by the claims.

## Claims

1. A commercial vehicle (1) comprising an outer body (3) delimited by a frontal surface (4) and by a pair of body sides (5) extending from opposite vertical lateral edges (6) of said frontal surface (4) and provided with respective doors (7), also comprising deflector means (10) arranged in alignment with said lateral edges (6) and adapted to direct a flow of air along said respective body sides (5) generated by the forward motion of said vehicle (1), said deflector means (10) defining, along each of said lateral edges (6), a plurality of passages (16) disposed in succession along said lateral edge (6), **characterised in that** each of said doors (7) has a lower strip (21) formed by a first inner panel (22) and by a second outer panel (23) which between them delimit a downwardly open hollow space (24), and **in that** at least one of said passages (16) of each of said lateral edges (6) is divided by a substantially vertical baffle (17) into two contiguous openings (18,19) so as to convey air both along the outer surface of said second panel (23) of the respective door (7) and into said hollow space (24).

2. A vehicle according to claim 1, **characterised in that** said deflector means (10) project from the outer profile of said body (3).

3. A vehicle according to any one of claims 1 or 2, **characterised in that** said passages (16) are of different section.

4. A vehicle according to any one of claims 1 to 3, **characterised in that** said passages (16) disposed lower down are of smaller vertical dimensions than said other passages (16).

5. A vehicle according to any one of claims 1 to 4, **characterised in that** said deflector means (10) comprise, for each of said lateral edges (6), a plurality of ribs (12) arranged in succession along said lateral edge (6) and delimiting said passages (16) between them.

6. A vehicle according to claim 5, **characterised in that** said ribs (12) of each of said lateral edges (6) are inclined so as to be mutually convergent towards a lower zone of the respective body side (5) and towards a rear part of the vehicle (1).

7. A vehicle according to claim 5 or 6, **characterised in that** said ribs (12) project from each of said lateral edges (6) and they are enclosed by a respective C-shaped section member (13) also projecting from said lateral edge (6).

8. A driver's cab (2) for a commercial vehicle according to any one of the preceding claims.

## Patentansprüche

1. Nutzfahrzeug (1), welches eine äußere Karosserie (3) umfasst, die begrenzt ist durch eine Vorderseite (4) und durch ein Paar von Karosserieseiten (5), die sich von einander gegenüber liegenden vertikalen seitlichen Kanten (6) der genannten Vorderseite (4) erstrecken und die mit den zugehörigen Türen (7) ausgestattet sind, und welches außerdem Ablenkmittel (10) umfasst, die in Ausrichtung mit den genannten Seitenkanten (6) angeordnet sind und so ausgelegt sind, dass sie einen Luftstrom, der durch die Vorwärtsbewegung des genannten Fahrzeugs (1) erzeugt wird, längs der genannten jeweiligen Karosserieseiten (5) leiten, wobei die genannten Ablenkmittel (10) längs einer jeden der genannten Seitenkanten (6) eine gewisse Anzahl von Durchtrittsstellen (16) festlegen, die aufeinanderfolgend längs der genannten Seitenkante (6) angeordnet sind, **dadurch gekennzeichnet, dass** jede der genannten Türen (7) einen unteren Streifen (21) aufweist, der durch eine erste innere Tafel (22) und durch eine zweite äußere Tafel (23) gebildet wird, welche zwischen sich einen nach unten hin offenen hohlen Raum (24) begrenzen, und **dadurch**, dass mindestens eine der genannten Durchtrittsstellen (16) von jeder der genannten Seitenkanten (6) durch ein im Wesentlichen senkrechtes Ablenkblech (17) in zwei aneinander grenzende Öffnungen (18, 19) dergestalt aufgeteilt wird, dass die Luft sowohl längs der Außenseite der genannten zweiten Tafel (23) der jeweiligen Tür (7) als auch in den genannten hohlen Raum (24) hinein befördert wird.

2. Fahrzeug nach Anspruch 1, **dadurch gekennzeichnet, dass** die genannten Ablenkmittel (10) vom Außenprofil der genannten Karosserie (3) abstehen.

3. Fahrzeug nach irgend einem der Ansprüche 1 oder 2, **dadurch gekennzeichnet, dass** die Durchtrittsstellen (16) unterschiedliche Querschnitte aufweisen.

4. Fahrzeug nach irgend einem der Ansprüche 1 bis 3, **dadurch gekennzeichnet, dass** die weiter unten befindlichen Durchtrittsstellen (16) geringere vertikale Abmessungen haben als die genannten anderen Durchtrittsstellen (16).

5. Fahrzeug nach irgend einem der Ansprüche 1 bis 4, **dadurch gekennzeichnet, dass** die Ablenkmittel (10) für jede der genannten Seitenkanten (6) eine gewisse Anzahl von Rippen (12) aufweisen, die der Reihe nach längs der genannten Seitenkante (6) angeordnet sind und die genannten dazwischen befindlichen Durchtrittsstellen (16) begrenzen.

6. Fahrzeug nach Anspruch 5, **dadurch gekennzeichnet, dass** die genannten Rippen (12) einer jeden der genannten Seitenkanten (6) dergestalt geneigt sind, dass sie zueinander konvergierend in Richtung auf den unteren Bereich der jeweiligen Karosserieseite (5) und in Richtung des hinteren Teils des Fahrzeugs (1) verlaufen.

7. Fahrzeug nach Anspruch 5 oder 6, **dadurch gekennzeichnet, dass** die genannten Rippen (12) von jeder der genannten Seitenkanten (6) abstehen und durch ein zugehörigen C-förmiges Abschnittselement (13), welches auch von der genannten Seitenkante (6) absteht, umschlossen sind.

8. Fahrerkabine (2) für ein Nutzfahrzeug gemäß irgend einem der vorangehenden Ansprüche.

## Revendications

1. Véhicule commercial (1) comprenant une carrosserie (3) délimitée par une surface frontale (4) et par une paire de parois latérales (5) s'étendant à partir des bordures latérales opposées (6) de ladite surface frontale (4) et munie de portes respectives (7), comprenant aussi des déflecteurs (10) disposés dans l'alignement des bordures latérales (6) et adaptés pour diriger, le long des parois latérales respectives (5), un flux d'air engendré par le mouvement dudit véhicule (1) vers l'avant, lesdits déflecteurs (10) définissant, le long de chacune desdites parois latérales (6), une pluralité de passages (16) disposées successivement le long de ladite paroi latérale (6), **caractérisé en ce que** chacune desdites portes (7) comporte une bande inférieure (21) formée par un premier panneau intérieur (22) et un second panneau extérieur (23) qui délimitent entre eux un espace creux (24) ouvert vers le bas, et **en ce qu'**au moins un desdits passages (16) de chacune desdites bordures latérales (6) est divisé par une cloison (17) substantiellement verticale en deux ouvertures contiguës (18, 19) afin d'amener l'air à la fois le long de la surface extérieure dudit second panneau (23) de la porte respective (7) et dans ledit espace creux (24).

2. Véhicule selon la revendication 1, **caractérisé en ce que** lesdits déflecteurs (10) se prolongent à partir du profil extérieur de ladite carrosserie (3).

3. Véhicule selon l'une quelconque des revendications 1 et 2, **caractérisé en ce que** lesdits passages (16) sont de sections différentes.

4. Véhicule selon l'une quelconque des revendications 1 à 3, **caractérisé en ce que** lesdits passages (16) disposés en partie basse sont de dimension verticale inférieure à celle des autres passages (16).

5. Véhicule selon l'une quelconque des revendications 1 à 5, **caractérisé en ce que** lesdits déflecteurs (10) comprennent, pour chacune desdites bordures latérales (6), une pluralité de nervures (12) disposées successivement le long de ladite bordure latérale (6) et délimitant entre eux lesdits passages (16).

6. Véhicule selon la revendication 5, **caractérisé en ce que** lesdites nervures (12) de chacune desdites bordures latérales (16) sont inclinées de manière à converger mutuellement vers une zone inférieure de la paroi latérale respective (5) et vers une partie arrière du véhicule (1).

7. Véhicule selon la revendication 5 ou 6, **caractérisé en ce que** lesdites nervures (12) se prolongent à partir de chacune desdites bordures latérales (6) et sont enveloppées par un élément respectif à section en C (13) se prolongeant aussi à partir de la bordure latérale (6).

8. Cabine de conducteur (2) pour véhicule commercial selon l'une quelconque des revendications précédentes.
